# FASCICULE DE BREVET EUROPEEN

(11) **EP 4 029 755 B1**
(45) Date de publication et mention de la délivrance du brevet: **13.12.2023**
(21) Numéro de dépôt: 22151684.2
(22) Date de dépôt: 14.01.2022
(51) Int. Cl.: B61B 12/06

(54) **INSTALLATION DE TRANSPORT PAR CÂBLE À SÉCURITÉ AMÉLIORÉE, PROCÉDÉ DE DÉTECTION D'UN ÉVÉNEMENT SUR CÂBLE ET PROCÉDÉ DE RÉALISATION D'UNE TELLE INSTALLATION**
SEILBAHNANLAGE MIT VERBESSERTER SICHERHEIT, VERFAHREN ZUR ERKENNUNG EINES EREIGNISSES AUF DEM SEIL UND VERFAHREN ZUR HERSTELLUNG EINER SOLCHEN ANLAGE
CABLE TRANSPORT FACILITY WITH IMPROVED SAFETY, METHOD FOR DETECTING AN EVENT ON CABLE AND METHOD FOR MANUFACTURING SUCH A FACILITY

(30) Priorité: 15.01.2021 FR 2100417
(43) Date de publication de la demande: 20.07.2022
(73) Titulaire: POMA, 38340 Voreppe (FR)
(72) Inventeur: SÈVE, Clémence, 38380 SAINT LAURENT DU PONT (FR); BONOMINI, PIERRE, 38500 VOIRON (FR); BILLET, GILLES, 38500 VOIRON (FR)
(74) Mandataire: Talbot, Alexandre

(56) Documents cités:
- EP-A2- 1 881 509
- CH-A5- 570 891
- FR-A1- 2 387 830
- FR-A1- 2 548 612
- FR-A1- 2 654 941
- FR-A1- 2 946 940

## Description

### Domaine technique

L'invention est relative à une installation de transport par câble, à un procédé de détection d'un évènement sur câble et à un procédé de réalisation d'une telle installation.

### Technique antérieure

Les installations de transport par câble comportent classiquement un ou plusieurs câbles qui soutiennent et déplacent des véhicules. Les câbles sont maintenus en position au moyen d'une pluralité de galets disposés le long du chemin du câble.

Il arrive, de manière exceptionnelle, que le câble quitte la gorge du galet avec éventuellement la chute du câble. Il est particulièrement important de pouvoir détecter le déplacement du câble hors de la gorge ainsi que la position du pylône associé à cet évènement. Il est connu du document FR2548612 d'associer à l'installation de transport une ou plusieurs lignes électriques de sécurité dont l'interruption, notamment lors du déraillement du câble, provoque l'arrêt de l'installation. Dans le document FR2548612, la ligne de sécurité comporte au moins une barrette cassante conductrice électriquement qui est disposée à proximité d'un galet de guidage du câble et qui est susceptible d'être brisée par la chute du câble. Ainsi, la chute du câble provoque l'interruption de la ligne de sécurité et l'arrêt de l'installation.

Cependant, les performances électriques des lignes électriques évoluent fortement avec la température et plus généralement avec les conditions météorologiques de sorte qu'il existe une évolution des performances électriques du système de détection. On constate également une évolution inhomogène des performances électriques des lignes électriques par vieillissement. Il apparait également que le système de détection génère des défauts furtifs qui sont au moins en partie liée à la connexion des détecteurs sur la ligne électrique qui les relie au circuit de commande central. Il en ressort que cette solution n'est pas satisfaisante. Afin de réduire les risques de déclenchements intempestifs, il est connu de monter un deuxième circuit électrique monté en parallèle du premier circuit électrique avec une deuxième barrette cassante montée juste à côté de la première barrette. Là encore, cette solution n'est pas satisfaisante car elle augmente les coûts associés à la détection d'un évènement sur câble ainsi que la complexité de l'installation.

Il est connu du document FR2946940 d'installer des circuits électriques qui relient les multiples pylônes avec un circuit de commande. Il existe plus de circuits électriques que de pylônes testés. Les circuits électriques comportent un ou plusieurs éléments fusibles qui sont montés sur les pylônes pour détecter un déraillement. L'absence de circulation du signal électrique dans les deux lignes électriques adjacentes permet de déterminer le pylône ayant subi un déraillement.

Il ressort également que les conducteurs du circuit électrique ne vieillissent pas tous à la même vitesse car ils se trouvent à des altitudes différentes, ils sont soumis à des conditions météorologiques (vent et ensoleillement) différentes. Il résulte que la solution proposée dans le document FR2946940 n'est pas complètement satisfaisante.

### Objet de l'invention

Un objet de l'invention consiste à prévoir une installation de transport par câble qui permet de détecter rapidement un évènement sur un câble, par exemple un déraillement du câble, une perte de galet ou un blocage de galet, et qui facilite la détermination du pylône associé à cet incident. A cet effet, l'installation de transport par câble comporte :
- un câble,
- une pluralité de pylônes munis chacun d'au moins un galet, le câble étant disposé en appui sur le au moins galet de la pluralité de pylônes, au moins un pylône de la pluralité de pylônes étant muni d'au moins un fusible définissant un premier état autorisant le passage d'un signal et un second étant bloquant le passage du signal,
- un dispositif de détection configuré pour détecter au moins un évènement de câble, le dispositif de détection faisant circuler un signal à travers le au moins un fusible de la pluralité de pylônes pour suivre l'état du au moins un fusible, le au moins un fusible étant configuré pour changer d'état entre le premier et le deuxième état lorsque le fusible détecte ledit au moins un évènement de câble, le dispositif de détection étant configuré pour émettre une alarme en réponse à la détection d'un changement d'état du au moins fusible de la pluralité de pylônes.

L'installation de transport par câble est remarquable en ce que le au moins un fusible est un fusible optique qui comporte une fibre optique et en ce que le dispositif de détection comporte un dispositif émetteur configuré pour émettre un signal optique, un dispositif récepteur configuré pour recevoir ledit signal optique, le dispositif émetteur étant relié au dispositif receveur par le au moins un fusible optique.

Selon l'invention, le dispositif de détection comporte au moins un fusible optique configuré pour changer d'état lorsque ledit au moins un fusible optique est sollicité mécaniquement par le câble.

Selon un développement de l'invention, le au moins un fusible optique est configuré pour sectionner la fibre optique lorsque le au moins un fusible optique est sollicité mécaniquement par le câble.

De manière avantageuse, le au moins un fusible optique est configuré pour sectionner la fibre optique par cisaillement lorsque le au moins un fusible optique est sollicité mécaniquement par le câble.

Selon un autre développement, le au moins un fusible optique comporte une tige montée mobile pour sectionner la boucle de fibre optique lorsque la tige est sollicitée mécaniquement par le câble. Le au moins un fusible optique comporte un corps définissant une cavité et une boucle de fibre optique, la boucle de fibre optique étant montée à l'intérieur de cavité autour de deux points de fixation séparés par la tige. Le au moins un fusible optique est configuré pour détecter un déraillement du câble au moyen de la tige.

Avantageusement, la boucle de fibre optique traverse la tige selon un premier axe et plus préférentiellement la tige est montée mobile en rotation autour d'un axe de rotation perpendiculaire au premier axe et à distance du premier axe pour cisailler la boucle de fibre optique.

De manière préférentielle, ledit au moins un évènement de câble est un évènement choisi parmi un déraillement du câble hors d'au moins un desdits galets, une perte d'au moins un desdits galets, un blocage d'au moins un desdits galets.

De manière préférentielle, chaque pylône comporte un rattrapeur destiné à recevoir le câble échappé du au moins un galet. Le au moins un fusible optique fait saillie du rattrapeur pour être heurté par le câble et détecter un déraillement du câble. En alternative, le rattrapeur possède une pièce mobile connectée au fusible optique de manière à solliciter mécaniquement le fusible optique lorsque la pièce mobile est heurtée par le câble.

Dans un mode de réalisation particulier, la sollicitation mécanique du au moins un fusible optique par le câble est une mise en contact direct du au moins fusible optique avec le câble et le sciage du au moins un fusible optique par le câble.

Dans un autre mode de réalisation préférentiel, le dispositif de détection comporte au moins un fusible optique agencé pour détecter une perte de galet ou un blocage de galet, le au moins fusible optique étant lié fonctionnellement à un balancier de la pluralité de pylône pour changer d'état lorsque que le balancier tourne au-delà d'une valeur seuil.

Avantageusement, plusieurs fusibles optiques de la pluralité de fusibles optiques sont montés en série sur une ligne optique et sont destinés à être traversés par le signal optique. Chaque au moins un fusible optique des plusieurs fusibles optiques est initialement dans le premier état. Le dispositif de détection comporte un dispositif de détermination configuré pour déterminer la position d'un fusible optique dans le second état parmi les plusieurs fusibles optiques montés en série lorsqu'un évènement de câble a été détecté.

Préférentiellement, le dispositif de détermination est configuré pour calculer le temps de transit du signal optique émis et réfléchi par la fibre optique sectionnée pour déterminer la position du fusible optique dans le second état.

Dans un mode de réalisation particulier, les plusieurs fusibles optiques sont montés chacun dans la ligne optique au moyen d'un connecteur introduisant au moins une perturbation et dans lequel le dispositif de détermination est configuré pour calculer le nombre de perturbation subi par le signal optique pour déterminer la position du fusible optique dans le second état.

Il est également avantageux de prévoir que chaque pylône comporte :
- un boitier de contrôle alimenté en électricité et relié au circuit de commande par une ligne optique,
- une pluralité de fusibles optiques connectés au boitier de contrôle, le boitier de contrôle possédant le dispositif émetteur et le dispositif récepteur.

L'invention a également pour objet un procédé de détection qui détecte efficacement un évènement de câble.

On tend à atteindre cet objectif au moyen d'un procédé de détection d'un évènement de câble dans une installation de transport par câble comportant au moins les étapes suivantes :
- fournir une installation de transport par câble comportant un câble, une pluralité de pylônes munis chacun d'au moins un galet, le câble étant disposé en appui sur le au moins galet de la pluralité de pylônes, au moins un pylône de la pluralité de pylônes étant muni d'au moins un fusible définissant un premier état autorisant le passage d'un signal et un second étant bloquant le passage du signal, le au moins un fusible est configuré pour changer d'état entre le premier état et le deuxième état lorsque le au moins un fusible détecte un évènement sur le câble ;
- émettre régulièrement un signal traversant le fusible ;
- détecter une absence de réception dudit signal par un dispositif récepteur de signal et en déduire un changement d'état du au moins un fusible représentatif d'un évènement sur le câble.

Le procédé est remarquable en ce que le au moins fusible, est un fusible optique qui comporte une fibre optique, en ce que le signal est un signal optique destiné à traverser le fusible optique, et en ce que le dispositif récepteur est un dispositif récepteur optique, et en ce que le au moins un fusible optique est configuré pour changer d'état lorsque ledit au moins un fusible optique est sollicité mécaniquement par le câble.

Préférentiellement, chaque fusible optique appartient à un connecteur optique, les connecteurs optiques étant montés en série le long de la fibre optique. Chaque connecteur optique introduit une perturbation du signal optique lorsque le signal optique traverse le connecteur optique. Le procédé comporte un décompte d'un nombre de perturbation du signal optique reçu pour déterminer le nombre de connecteurs optiques traversés et estimer la position du fusible optique ayant changé d'état.

De manière avantageuse, les fusibles optiques sont montés en série le long de la fibre optique. Chaque groupe de deux fusibles optiques consécutifs le long de la fibre optique sont séparés d'une distance seuil, la distance seuil correspondant à la distance minimale qui existe le long de la fibre optique entre deux fusibles optiques et qui permet une distinction par un appareil de mesure du signal optique, la détermination du fusible optique ayant changé d'état est réalisée en calculant le temps mis pour recevoir le signal réfléchi par le fusible qui a changé d'état

L'invention a encore pour objet un procédé de réalisation d'une installation de transport par câble qui est facile à mettre en oeuvre et plus efficace que les configurations de l'art antérieur.

On tend à atteindre ce résultat au moyen d'un procédé de réalisation d'une installation de transport par câble qui comporte les étapes suivantes :
- fournir une installation de transport par câble comportant un câble, une pluralité de pylônes munis chacun d'au moins un galet, le câble étant disposé en appui sur le au moins galet de la pluralité de pylônes, au moins un pylône de la pluralité de pylônes étant muni d'au moins un fusible électrique définissant un premier état autorisant le passage d'un signal électrique et un second état bloquant le passage du signal électrique, le au moins un fusible est configuré pour changer d'état entre le premier état et le deuxième état lorsque le au moins un fusible électrique est sollicité mécaniquement par le câble, le au moins un fusible électrique étant relié à un circuit de détection par un câble électriquement conducteur, le dispositif de détection étant configuré pour détecter au moins un évènement de câble ;
- remplacer le fusible électrique par un fusible optique, le fusible optique définissant un premier état autorisant le passage d'un signal optique et un second étant bloquant le passage du signal optique, le au moins un fusible optique étant configuré pour changer d'état entre le premier état et le deuxième état lorsque le au moins un fusible optique détecte un évènement sur le câble ;
- relier le au moins un fusible optique au circuit de détection par une ligne optique, et dans lequel le dispositif de détection comporte un dispositif émetteur configuré pour émettre un signal optique, un dispositif récepteur configuré pour recevoir ledit signal optique, le dispositif émetteur étant relié au dispositif récepteur par le au moins un fusible optique, le dispositif de détection étant configuré pour émettre une alarme en réponse à la détection d'un changement d'état du au moins un fusible optique.

### Description sommaire des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1 illustre, de manière schématique, un premier mode de réalisation d'une installation avec une ligne optique spécifique reliant chaque pylône muni d'au moins un fusible optique ;
- la figure 2 représente de manière schématique, un second mode de réalisation d'une installation avec une ligne optique reliant tous les pylônes munis d'au moins un fusible optique ;
- les figures 3a et 3b représentent de manière schématique en vue de face et en perspective un fusible optique avec le cheminement de la fibre optique ou sans fibre optique, avec une tige mobile destinée à sectionner la fibre optique ;
- la figure 4 représente de manière schématique, un autre mode de réalisation d'un fusible optique avec le cheminement de la fibre optique en pointillé, la fibre optique étant destinée à être sectionnée par le câble ;
- la figure 5 représente de manière schématique un rattrapeur monté sur un pylône avec des galets de support,
- la figure 6 représente de manière schématique un rattrapeur monté sur un pylône avec des galets de compression,
- la figure 7 représente de manière schématique une tête de pylône avec une pluralité de fusibles optiques.

### Description des modes de réalisation

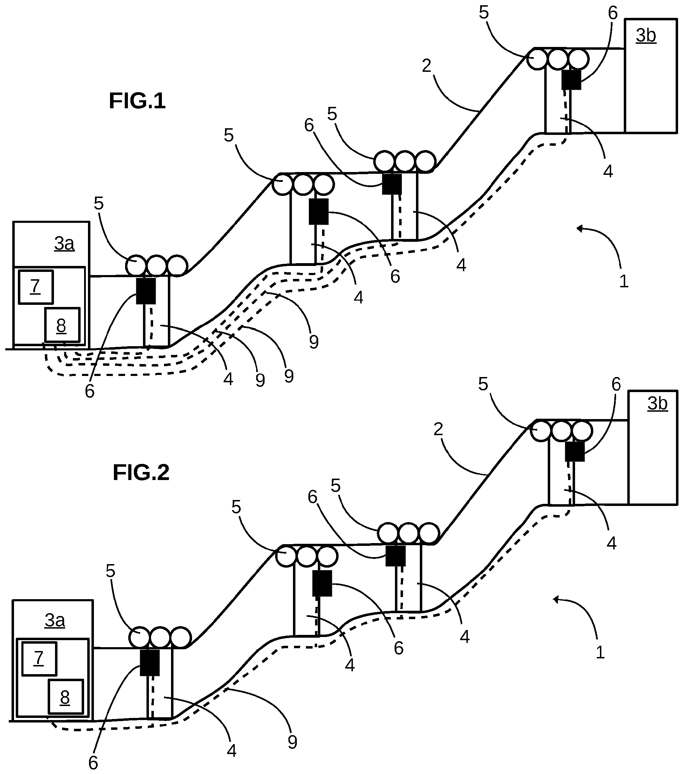

Sur les figures 1 et 2, on a représenté un mode de réalisation d'une installation 1 de transport par câble. L'installation 1 comporte un câble aérien 2 reliant deux stations 3a et 3b. Le câble aérien 2 peut être un câble uniquement tracteur, un câble uniquement porteur ou un câble tracteur-porteur. Un câble 2 uniquement tracteur est destiné à tracter un ou plusieurs véhicules sans pouvoir supporter le poids du véhicule, un câble 2 uniquement porteur est configuré pour porter le ou les véhicules sans pouvoir tracter le véhicule. Un câble tracteur-porteur est destiné à supporter le poids du véhicule et à le tracter entre deux stations 3a et 3b.

L'installation de transport par câble peut être une installation de transport de personnes ou de marchandises. L'installation peut comporter une station ou une pluralité de stations également appelées gares.

L'installation 1 peut être de tout type, par exemple du type monocâble, comme illustré sur la figure 1, ou bicâble, à pinces fixes ou débrayable, à câble continu ou va et vient. Une installation monocâble comporte un seul câble qui est à la fois porteur et tracteur, une installation bicâble comporte au moins un câble tracteur et au moins un câble porteur. Une installation à pinces fixes comprend des véhicules qui sont accrochés de manière permanente au câble tracteur, une installation débrayable comporte des véhicules accrochés de manière amovible au câble tracteur. Une installation à câble continu comporte un câble tracteur qui décrit une boucle fermée entre deux gares d'extrémité de l'installation et les véhicules circulent en continu le long du câble tracteur. Une installation va et vient comporte un véhicule qui effectue un aller-retour entre deux gares d'extrémité selon une même voie.

Dans le mode de réalisation particulier illustré aux figures 1 et 2, l'installation 1 comporte deux gares d'extrémité 3a et 3b ou stations d'extrémités pour le débarquement/embarquement des personnes ou des marchandises dans les véhicules (non représentés). En outre, l'installation 1 comporte une gare motrice 3a/3b munie d'un moteur pour entraîner une poulie motrice afin de déplacer le câble tracteur 2. L'installation 1 peut comporter une gare de renvoi 3b/3a comprenant une poulie de renvoi pour la mise en tension du câble tracteur 2. De manière avantageuse, les véhicules sont accouplés au câble tracteur 2. Il est préférable que le câble soit disposé au-dessus des véhicules et au-dessus du sol. Cependant, une installation où les véhicules sont tractés par un câble disposé sous les véhicules et également envisageable, par exemple des véhicules circulant sur des rails et/ou des roues.

Chaque véhicule de l'installation 1 comporte un dispositif d'accrochage pour accrocher le véhicule au câble tracteur 2. Le dispositif d'accrochage peut être une pince fixe ou débrayable.

Il est particulièrement avantageux d'utiliser un câble porteur-tracteur.

L'installation 1 comporte également un, ou plusieurs ouvrages 4 où circule le câble 2. L'ouvrage 4 est une structure verticale servant au maintien du câble 2. L'ouvrage 4 peut-être un pylône de ligne, c'est-à-dire un pylône situé entre des gares d'embarquement et/ou de débarquement.

Un pylône 4 de ligne peut servir au support, à la compression, ou à la déviation horizontale du câble tracteur. Un ouvrage 4 peut également être une structure porteuse interne située au sein d'une gare d'extrémité 3a,3b ou d'une gare intermédiaire (non représentée) et également appelé pylône porteur interne. Le câble 2 définit un chemin qui relie les gares 3a,3b entre elles.

De manière générale, l'ouvrage 4 comporte au moins un galet 5, de préférence une pluralité de galets 5. Un galet est une roue munie d'une gorge destinée à recevoir le câble 2. Quelle que soit la configuration, le câble 2 est en appui sur le galet 5.

Le galet 5 est monté mobile en rotation autour d'un axe de rotation principal. L'axe de rotation principal est avantageusement un axe horizontal, c'est-à-dire que le galet 5 est un galet de compression ou de support, et le véhicule peut monter ou descendre.

Pour détecter un incident relatif au câble également appelé évènement de câble 2 ou évènement sur câble 2, l'installation 1 est munie d'un dispositif de détection configuré pour détecter un déplacement du câble 2 hors de sa position normale, par exemple un déraillement du câble, ainsi qu'un incident sur un des galets associés au câble 2, par exemple un blocage de galet 5 et/ou une perte de galet 5 sur un pylône 4. Un déraillement du câble 2 correspond à un câble 2 qui sort d'une gorge d'au moins un galet 5, c'est-à-dire qui quitte sa position prédéfinie. Selon les cas de figure, le câble 2 peut tomber ou remonter pour être préférentiellement coincé par un rattrapeur ou il peut être coincé latéralement par un flasque (non illustré). Une perte de galet 5 correspond au décrochage d'un galet 5 alors que le blocage d'un galet 5 correspond à un galet 5 qui n'est plus en mesure de tourner pour suivre le défilement du câble 2. Le pylône peut être un pylône de ligne ou un pylône de station.

Pour détecter un évènement de câble 2, il est particulièrement avantageux qu'au un moins un pylône 4 et préférentiellement que plusieurs pylônes 4 soient munis d'au moins un élément fusible qui est un fusible optique 6. Préférentiellement, chaque pylône 4 est muni d'au moins un fusible optique 6 agencé pour détecter une configuration correspondant à un évènement de câble 2, par exemple un évènement choisi parmi un déraillement pour au moins un galet, une perte de galet 5 et un blocage de la rotation d'un galet 5. Plus préférentiellement, le pylône 4 comporte plusieurs fusibles optiques 6 configurés pour détecter plusieurs configurations différentes d'évènements de câble parmi les évènements précités. Par exemple, le pylône 4 possède au moins un fusible optique 6 configuré pour détecter un déraillement du câble 2, au moins un fusible optique 6 configuré pour détecter une perte de galet 5 et au moins un fusible optique 6 configuré pour détecter un blocage de galet 5.

Le fusible optique est configuré pour changer d'état entre le premier et le deuxième état lorsque le au moins un fusible 6 est sollicité mécaniquement par le câble 2. Le premier état autorise le passage du signal optique alors que le deuxième état bloque le signal.

Le ou les fusibles optiques 6 sont reliés à un dispositif émetteur 7 configuré pour émettre un signal destiné à traverser un ou plusieurs fusibles optiques 6 et à un dispositif récepteur 8 configuré pour recevoir un signal ayant traversé un ou plusieurs fusibles optiques 6.

Afin de gagner en efficacité, le fusible optique 6 comporte au moins une fibre optique 11 dont la valeur d'atténuation optique évolue en fonction de l'état du fusible optique 6.

La configuration de l'art antérieur utilise un fil électriquement conducteur, par exemple un fil de cuivre, dont les performances électriques évoluent fortement avec la température et son vieillissement. Les performances optiques de la fibre optique 11 sont moins dépendantes des conditions météorologiques et notamment de la température. Il ressort également que la fibre optique n'est pas conductrice électriquement ce qui rend le dispositif de détection non sensible ou moins sensible à la foudre. Par ailleurs, les connexions entre le fusible optique 6 et le reste du circuit optique présentent un rapport performance/cout qui est plus favorable que son équivalent électrique. Il en ressort que les déclenchements parasites des fusibles optiques sont plus faibles que ceux des fusibles électriques.

L'atténuation de la fibre optique 11 étant faible, il est plus facile de détecter une absence de signal et donc un changement d'état du fusible optique 6 même sur une longue distance.

De manière particulièrement avantageuse, lorsque l'installation est en fonctionnement, le fusible optique 6 est configuré pour être dans le premier état, c'est-à-dire autoriser le passage du signal optique. Cette configuration permet de détecter un changement d'état du fusible optique 6, une défaillance du fusible optique 6 et une défaillance du dispositif émetteur 7. Le fusible optique 6 bascule dans l'état qui bloque le passage du signal optique entre le dispositif émetteur 7 et le dispositif récepteur 8 lorsque fusible optique 6 détecte un évènement de câble 2.

Le fusible optique 6 est destiné à fonctionner dans des environnements difficiles, c'est-à-dire qu'il peut être soumis à des faibles températures, à la pluie, à la glace, au rayonnement solaire ce qui va faire vieillir les composants électroniques et/ou fausser des mesures. Il est donc particulièrement avantageux d'utiliser un fusible optique 6 dont la réalisation est simplifiée. Pour les mêmes raisons, il est particulièrement avantageux d'utiliser un fusible optique 6 qui est passif, c'est-à-dire dépourvu d'alimentation électrique afin d'éviter de devoir alimenter en électricité le fusible optique 6. Il est également avantageux d'utiliser un fusible optique qui est électriquement isolant ce qui facilite l'installation du fusible optique sur un pylône qui est classiquement réalisé en métal.

Le dispositif émetteur 7 émet un signal optique qui doit traverser le fusible optique 6 pour atteindre le dispositif récepteur 8. Lorsque le dispositif récepteur 8 détecte une absence de signal optique, il en déduit que le câble a subi un évènement considéré comme dangereux et il envoie une alarme. L'émission de l'alarme peut être associée à un arrêt de l'installation, par exemple un arrêt du moteur d'entrainement du câble 2. De préférence, le dispositif émetteur 7 émet régulièrement un signal optique. Il est avantageux que le dispositif émetteur 7 émette plusieurs signaux optiques par seconde.

Dans une configuration, le fusible optique 6 peut être réarmé, c'est-à-dire que lors de l'intervention sur le pylône pour inspecter le déraillement, une intervention permet de basculer le fusible optique dans son état initial.

Dans un mode de réalisation particulier, le fusible optique 6 est un fusible non-réarmable, c'est-à-dire un fusible optique 6 qui n'accepte qu'un seul basculement d'état. Préférentiellement, le fusible optique 6 est configuré pour uniquement basculer d'un premier état autorisant le passage du signal optique à un deuxième état ne laissant pas passer le signal une fois qu'un déraillement est intervenu. Cette configuration permet de s'assurer que la détection d'un incident sera obligatoirement suivie d'une intervention sur le pylône afin d'agir sur le fusible optique. Par exemple, le fusible optique 6 peut être configuré pour être à usage unique de sorte que son déclenchement se traduit obligatoirement par le remplacement du fusible optique 6.

Le fusible optique 6 étant destiné à fonctionner dans un environnement agressif, il est particulièrement avantageux que le fusible optique 6 soit robuste tout en étant en mesure de détecter l'incident et de couper la communication. Il est avantageux que le fusible optique 6 soit non alimenté en électricité. Il est également avantageux que le fusible optique 6 soit dépourvu d'un miroir mobile et/ou d'un ressort.

Afin d'avoir une détection fiable d'un événement sur câble par exemple un déraillement du câble 2 par rapport à un galet 5 du pylône 4, une pluralité de fusibles optiques 6 est montée le long du circuit de cheminement du câble sur chaque pylône 4.

Dans une configuration particulière illustrée à la figure 1, chaque pylône 4 est associé à une ligne optique 9 spécifique. En d'autres termes, une ligne optique 9 ne comporte ou n'est associée qu'à un seul pylône 4. La ligne optique 9 peut posséder un dispositif émetteur 7 et un dispositif récepteur 8 qui lui sont spécifiques, mais il est avantageux de mutualiser ces dispositifs pour suivre plusieurs lignes optiques. Ainsi, un dispositif émetteur 7 émet des signaux optiques pour plusieurs pylônes 4 au moyen de plusieurs lignes optiques différentes. Un dispositif récepteur 8 reçoit des signaux optiques de plusieurs pylônes 4 à partir des multiples lignes optiques 9. Le dispositif récepteur 8 est en mesure d'identifier le pylône fautif.

Lorsque qu'un évènement de câble 2 intervient sur un pylône 4, le dispositif récepteur 8 ne reçoit plus de signal de la ligne optique 9 associée ce qui permet de déterminer rapidement le pylône 4 fautif. Dans une telle configuration, il est particulièrement avantageux de monter les fusibles optiques 6 en série afin de pourvoir détecter rapidement le fusible optique 6 à l'état bloquant et donc estimer la position de l'évènement et/ou le type d'évènement.

Lorsque le fusible optique 6 est à l'état bloquant, l'extrémité de la fibre optique 11 montée dans le fusible optique apparait comme un défaut, par exemple un défaut qui réfléchit une partie du signal émis. En utilisant un dispositif d'échométrie ou de réflectométrie optique, il est possible d'analyser la lumière réfléchie par rapport à la lumière émise et de déterminer les défauts et atténuations ainsi que leurs distances. Il est alors possible de déterminer la position exacte du fusible fautif sur le pylône 4 et éventuellement le type d'évènement.

Il est avantageux que les multiples fusibles optiques 6 d'un pylône soient montés en série sur la ligne optique 9 dédiée. Dans une variante, les multiples fusibles optiques du pylône 4 sont montés en étoiles et sont reliés à un dispositif de répartition qui fournit un signal optique pour chaque fusible optique 6 et qui récupère le signal optique depuis chaque fusible optique 6. Cette variante est moins avantageuse car elle nécessaire d'utiliser un dispositif de répartition qui doit être alimenté en électricité.

Comme l'atténuation optique des fibres optiques évolue peu avec le temps, il est préférable d'utiliser la configuration particulière illustrée à la figure 2, les multiples fusibles optiques 6 de l'installation 1 sont montés en série. Le même signal traverse les différents fusibles optiques jusqu'à ce qu'un évènement sur câble 2 intervienne. Une seule ligne optique 9 relie le dispositif émetteur 7 et le dispositif récepteur 8 et connecte en série les multiples fusibles optiques 6. Une seule ligne optique relie tous les pylônes 4 ce qui permet de former un dispositif de détection compact et sûr.

En utilisant un dispositif d'échométrie ou de réflectométrie optique, il est possible d'analyser la lumière réfléchie par rapport à la lumière émise et de déterminer les défauts et atténuations ainsi que leurs distances. Il est alors possible de déterminer la position exacte du fusible optique 6 fautif parmi tous les fusibles optiques 6 de la ligne optique 9 et répartis sur les différents pylônes 4.

Il est encore possible de mélanger ces deux modes de réalisation, en utilisant plusieurs lignes optiques 9 qui sont chacune associées à un ou plusieurs pylônes 4. Là encore, il est avantageux de monter les fusibles optiques 6 en série afin de détecter la position du fusible optique 6 fautif avec un dispositif d'échométrie ou de réflectométrie optique et d'éviter de monter un dispositif de répartition consommateur d'électricité sur un pylône 4.

Différents fusibles optiques peuvent être montés sur un pylône 4 afin de détecter un déraillement sur des galets différents. La position des fusibles optiques 6 par rapport aux galets 5 dépend de la configuration du pylône 4. Si le galet 5 est un galet de support, ce dernier évite la chute du câble 2. Il est préférable de monter le fusible optique sous la position attendue du câble. En revanche, si le galet 5 est un galet de compression, ce dernier évite la remontée du câble 2 et il est préférable de monter le fusible optique au-dessus la position attendue du câble 2. Afin de détecter une sortie du câble hors de la gorge d'un galet dans une direction qui n'aboutit pas à la chute du câble, par exemple un décalage latéral du câble 2 contre un flasque, il est préférable de placer un fusible optique 6 hors de l'axe correspondant à la position normale du câble. De cette manière, lorsque le câble quitte sa position, il sollicite mécaniquement le fusible optique 6 par exemple en entrant en contact avec le fusible optique 6 ce qui déclenche le fusible optique 6. Dans ce cas de figure, le fusible optique peut être scié par le câble qui va scier la fibre optique. Dans une alternative de réalisation, le câble 2 qui quitte le galet 5 sollicite un organe qui se déplace pour solliciter mécaniquement le fusible optique 6. La sortie du câble 2 hors de la gorge sollicite le fusible optique 6 au moyen d'un élément intermédiaire. Lorsque le câble 2 sollicite mécaniquement l'élément intermédiaire, par exemple lorsqu'il heurte l'élément intermédiaire, ce dernier sollicite mécaniquement le fusible optique 6 et provoque un changement d'état.

Pour détecter plus facilement un déraillement qui correspond à un câble qui quitte une gorge d'un galet 5, il est préférable que chaque pylône 4 comporte un rattrapeur 10, c'est-à-dire un support destiné à recevoir le câble 2 échappé du galet 5. Le support 10 guide au moins en partie le câble échappé du galet 5 pour définir sa trajectoire et faciliter son contact avec le fusible optique 6 ou un élément intermédiaire qui actionne le fusible optique.

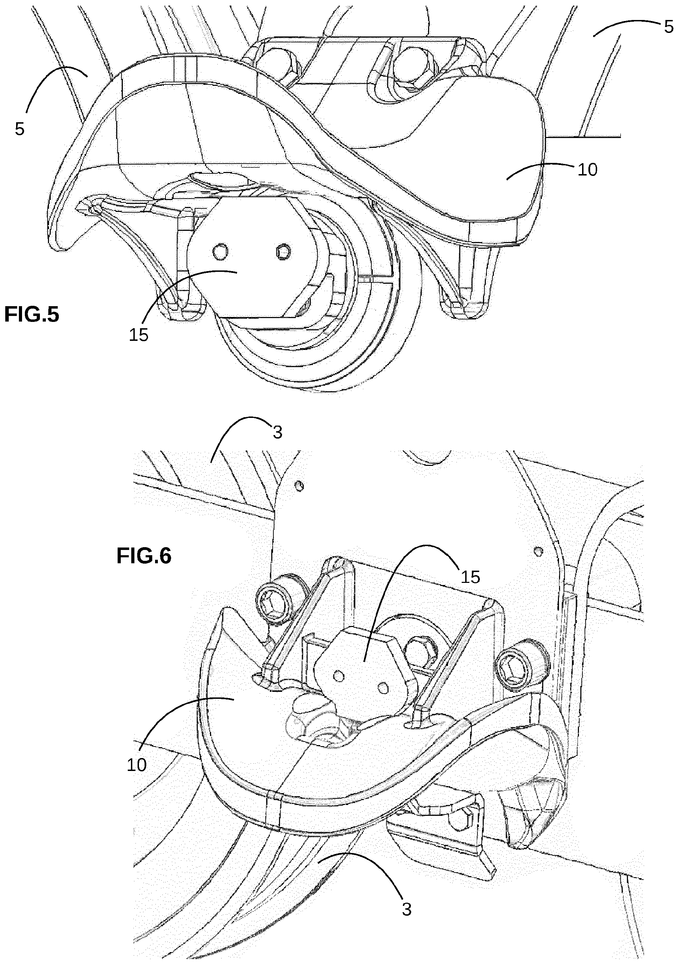

Les figures 5 et 6 illustrent deux modes de réalisation de rattrapeurs 10 montés pour récupérer un câble 2 quittant un galet de support (figure 5) et un galet de compression (figure 6). La forme du rattrapeur 10 peut être quelconque tant qu'il permet de mieux maitriser la trajectoire du câble 2 qui a déraillé pour faciliter la détection du déraillement.

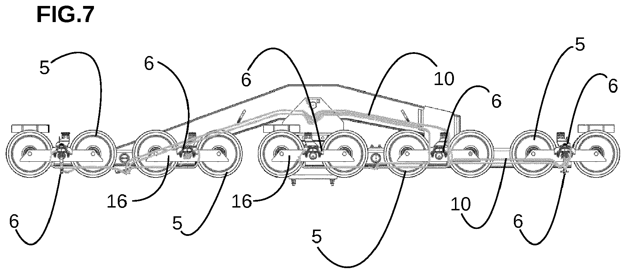

Le fusible optique 6 est agencé pour détecter la sortie du câble 2 hors du galet 5 associé ou des galets associés et préférentiellement son passage sur le rattrapeur 10. Le fusible optique 6 est configuré pour basculer d'un état autorisant le passage du signal à un état bloquant le passage du signal lorsque le fusible optique 6 est heurté par le câble 2 qui glisse sur le rattrapeur 10. Le fusible optique 6 est disposé à distance de la gorge et, de préférence, à distance du galet 5. Comme illustré à la figure 7, le fusible optique 6 est de préférence monté fixe sur le pylône 4 et plus préférentiellement monté fixe sur le balancier du pylône 4. Plusieurs galets 5 sont montés sur le balancier. Le pylône 4 comporte avantageusement au moins un balancier, par exemple un balancier primaire monté à pivotement sur la structure porteuse du pylône, ou un balancier primaire monté à pivotement sur la structure porteuse et un ou plusieurs balanciers secondaires montés à pivotement par rapport au balancier primaire. Un fusible optique 6 peut être monté de manière à détecter le pivotement du balancier primaire par rapport à la structure porteuse au-delà d'une valeur seuil. Un fusible optique 6 peut être monté de manière à détecter le pivotement du balancier secondaire par rapport au balancier primaire au-delà d'une valeur seuil

Préférentiellement, le fusible optique 6 fait saillie du rattrapeur 10. Lorsque le câble 2 s'échappe de la gorge du galet 5, le câble 2 bouge jusqu'à atteindre un rattrapeur 10, par exemple un rattrapeur 10 en forme de U. Lorsque le câble 2 est en contact avec le rattrapeur 10, il glisse jusqu'à atteindre le fusible optique 6. Une fois que le câble 2 entre en contact avec le fusible optique 6, il déforme le fusible optique 6 ce qui réalise le changement d'état.

Dans un autre mode de réalisation, le fusible optique 6 est configuré pour détecter un autre mode de défaillance dit « perte de galet ». La défaillance n'est plus un déplacement du câble 2 selon une direction perpendiculaire à l'axe longitudinal du câble 2 (axe défini par l'alignement des gorges des galets), mais une défaillance d'un galet 5 qui quitte son emplacement. Dans ce cas de figure, le balancier qui comporte le galet 5 défaillant est déséquilibré ce qui induit une rotation du balancier au-delà d'une position seuil. Le fusible optique 6 peut être configuré pour détecter cette rotation excessive du balancier. La rotation du balancier sollicite mécaniquement le fusible optique qui change d'état, par exemple lorsqu'une valeur seuil est atteinte.

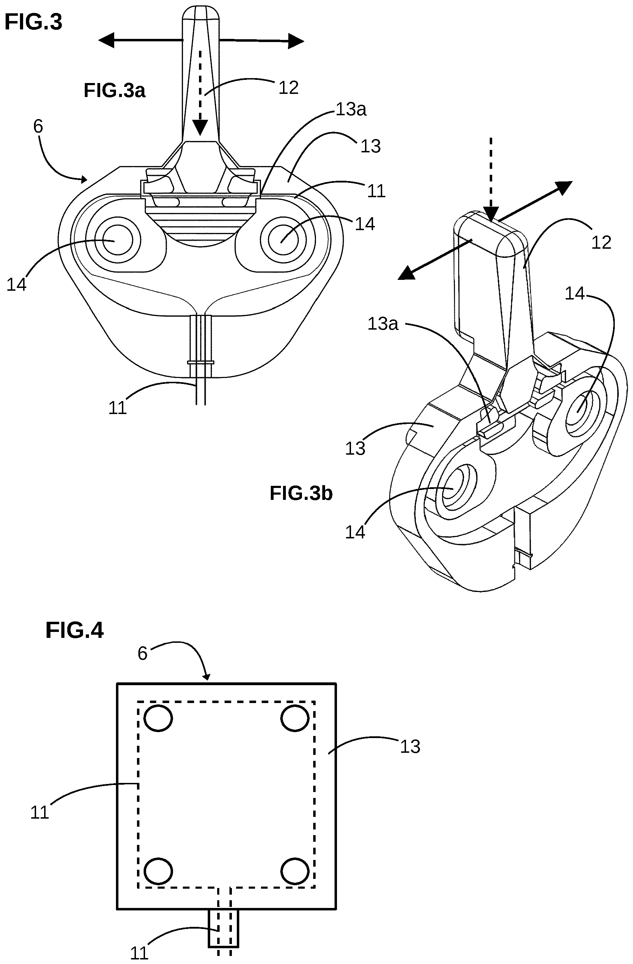

A titre d'exemple, le balancier est monté à rotation autour d'un arbre de rotation pour définir un axe de rotation perpendiculaire à l'axe longitudinal du câble 2. Le fusible 6 est monté de sorte que la rotation du balancier suite à un évènement de câble 2 entraine le déplacement du fusible 6 qui vient en contact du câble. Le câble circule et frotte contre le fusible optique 6 ce qui découpe le corps 13 du fusible optique 6 puis la fibre optique 11. Lors de la découpe de la fibre optique 11, ou une fois la fibre optique 11 découpée, le dispositif récepteur 8 détecte une atténuation du signal ou la non-réception du signal optique et en déduit un incident ce qui peut arrêter le moteur d'entrainement du câble 2. La configuration de fusible 6 illustrée à la figure 4 est particulièrement adaptée. Le câble 2 circule en contact d'un fusible optique pour scier la fibre optique. Le fusible optique 6 est réalisé dans un matériau plus tendre que le câble 2 de sorte que la mise en contact du fusible optique 6 avec le câble 2 entraine le sciage du fusible optique 6 par le câble 2 jusqu'à sectionner la fibre optique.

Dans une autre configuration, il est avantageux que le balancier ne soit pas équilibré en l'absence du câble 2. Il est possible de prévoir un galet plus lourd que l'autre et/ou un galet plus éloigné de l'axe de rotation du balancier que l'autre galet. De cette manière, lorsque le câble 2 quitte les galets 5 sans atteindre le rattrapeur 10, le balancier pivote et change l'état du fusible optique 6 associé au balancier. Dans ce cas de figure, si le déplacement du câble 2 n'est pas compatible avec une mise en contact du rattrapeur 10, la rotation du balancier peut entraîner le changement d'état du fusible optique 6. La rotation du balancier jusqu'à une position seuil cause le changement d'état du fusible optique 6.

Dans un mode de réalisation, un fusible optique 6 est disposé entre deux galets 5 de manière décalée au plan comprenant les parois latérales des gorges de deux galets. Ainsi, lorsque le câble 2 est dans les gorges des deux galets, le câble se trouve à distance du fusible optique. Lorsque le câble 2 quitte les gorges des galets, il se rapproche jusqu'à venir en contact du fusible optique et il abrase la surface du fusible optique jusqu'à sectionner la fibre optique.

L'installation comporte préférentiellement des fusibles optiques 6 montés démontables par rapport à la ligne optique 9 pour faciliter les opérations de maintenance. Les fusibles optiques 6 comportent une entrée et une sortie et préférentiellement une fibre optique 11 interne qui assurent la transmission du signal optique.

Dans un mode de réalisation particulier non illustré, le fusible optique 6 peut comporter un miroir agencé mobile par rapport à la fibre optique 11 entre une première position configurée pour réfléchir le signal optique dans la fibre optique 11 et une deuxième position configurée pour empêcher la réflexion du signal optique. Le fusible optique 6 comporte une tige et la position du miroir est définie par la position de la tige. Le miroir peut être monté sur la tige. Le fusible optique 6 est monté sur le pylône de sorte que la tige soit déplacée par le câble lorsque le câble quitte la gorge d'un galet 5 pour glisser sur un rattrapeur 10. La tige est montée mobile par rapport à un corps 13 du fusible optique. Dans une autre configuration, le fusible est monté sur le pylône de sorte que la tige définisse la rotation maximale autorisée pour le balancier. Lorsque le balancier est déséquilibré et atteint la position seuil, il heurte le fusible optique 6 qui change d'état, par exemple en déplaçant la tige et le miroir. Dans une autre configuration, la rotation du balancier sollicite mécaniquement le fusible optique 6 et lorsque la rotation atteint une valeur seuil, le fusible optique change d'état.

Cette solution technique permet de modifier l'état du fusible optique et donc de bloquer ou lasser passer le signal optique circulant dans la fibre optique 11 en fonction de la position du câble par rapport au galet ou de la position du balancier ce qui permet de déterminer un déraillement ou un autre type d'évènement. Cependant, cette solution technique apparait encombrante et coûteuse car elle nécessite d'intégrer un miroir et une tige 12 montés tous les deux mobiles par rapport au corps 13 et/ou par rapport à la fibre optique 11. La réflectivité du miroir peut aussi évoluer avec le temps à cause des conditions climatiques.

Dans une autre configuration, le fusible optique 6 possède deux portions de fibres optiques qui sont montées mobiles l'une par rapport à l'autre et sont reliées optiquement ensemble par un adaptateur optique. Le fusible optique comporte également une tige 12. L'adaptateur optique est configuré pour assurer le transit des signaux optiques entre les deux portions de la fibre optique 11 dans un premier état. La position d'au moins une des portions de fibre optique 11 est définie par rapport à l'adaptateur optique au moyen de la tige. Le déplacement de la tige entraine le déplacement d'une portion de la fibre optique 11 ce qui modifie le couplage optique et donc l'atténuation du signal. Les fusibles optiques 6 peuvent être montés comme indiqués juste au-dessus pour détecter différents d'évènements sur câble, et par exemple différents types de déraillement. En détectant l'évolution du couplage optique et donc l'atténuation introduite par le fusible optique 6, il est possible de déterminer un évènement sur le câble 2.

Afin de s'assurer qu'une intervention sera réalisée sur le pylône 4 ayant subi un incident, il est particulièrement avantageux que le fusible optique 6 soit non-réarmable. Il est préférable que le fusible optique soit à remplacer après un incident. Il est préférable que le fusible optique soit au moins en partie cassé lorsque le fusible optique détecte un évènement, par exemple lorsque le câble 2 heurte le fusible optique 6.

Afin de réaliser un fusible optique 6 compact et robuste, il est particulièrement avantageux que le fusible optique 6 possède peu d'éléments mobiles et notamment soit configuré pour sectionner la fibre optique 11 lorsque le câble 2 quitte la gorge du galet 5 et heurte le fusible optique 6. En sectionnant la fibre optique 11, on bloque le passage du signal optique et on rend le fusible optique non-réarmable ce qui nécessite une intervention humaine avec le changement du fusible pour améliorer la sécurité.

Afin de sectionner la fibre optique 11 à l'intérieur du fusible optique 6, il est particulièrement avantageux que le fusible optique 6 comporte une fibre optique 11 à l'intérieur d'un corps 13 ainsi qu'une tige 12 montée mobile par rapport au corps 13 et agencé pour sectionner la fibre optique 11 lorsque le câble heurte la tige 12 du fusible optique 3 et déplace la tige 12. Un tel mode de réalisation est illustré à la figure 3 et notamment aux figures 3a et 3b.

La tige 12 peut être montée sur la trajectoire du câble 2 de sorte que la tige 12 tire sur la fibre optique 11 dans le sens de son axe longitudinal pour sectionner la fibre optique 11 par traction en allongeant la fibre au-delà de son point de rupture. La rupture de la fibre optique 11 peut également être obtenu par une autre sollicitation mécanique de la fibre optique 11, par exemple par enroulement autour d'un objet ou par torsion. Cependant, ces différents modes de réalisation ne sont pas les plus efficaces dans une utilisation pour une installation de transport par câble soumise à des conditions climatiques sévères.

De manière avantageuse, la tige 12 et le corps 13 sont agencés de sorte que la tige 12 sectionne la fibre optique 11 par cisaillement. Par exemple, la tige 12 et le corps peuvent former une paire de ciseau qui découpe la fibre optique 11. La tige 12 se déplace préférentiellement selon une direction perpendiculaire à l'axe longitudinal de la fibre optique 11 pour sectionner la fibre optique 11. La figure 3 illustre au moyen de deux flèches les deux directions possibles de déplacement d'une extrémité de la tige 12 qui réalise le déplacement de l'autre extrémité de la tige pour sectionner la fibre optique 11 contre le corps 13. La figure 3 illustre encore, au moyen d'une flèche en pointillé, un déplacement possible de la tige par rapport au corps 13 et qui entraine un sectionnement de la fibre optique.

Dans le mode de réalisation particulier, la tige 12 est fixée au corps 13 par un ou plusieurs connecteurs qui sont déformables ou sécables. L'application d'un effort sur la tige 12 au-delà d'une valeur seuil entraine la déformation et éventuellement la rupture d'au moins un des connecteurs. La tige 12 se déplace et sectionne la fibre optique 11. D'autres modes de déplacement de la tige 12 par rapport au corps 13 sont possibles pour obtenir la rupture de la fibre optique 11.

La tige 12 peut être pourvue d'un couteau. Lorsque le câble 2 entre en contact de la tige 12, la tige 12 se déplace et le couteau coupe la fibre optique 11. Le mouvement de la tige 12 peut être quelconque, par exemple une translation ou une rotation.

Dans la configuration illustrée à la figure 3, la tige 12 et le corps 13 sont configurés pour sectionner la fibre optique 11 par cisaillement. Le corps 13 définit une rainure 13a et la tige 12 est disposée dans la rainure 13a. La fibre optique 11 s'étend depuis une partie du corps 13, à travers la tige 12 et jusqu'à une autre partie du corps 13. La tige 12 est montée mobile par rapport au corps 13. Lorsque le câble entre en contact avec la tige 12, la tige 12 se déplace perpendiculairement à l'axe longitudinal de la fibre optique 11 et sectionne la fibre optique 11. De manière avantageuse, la tige 12 est montée à rotation par rapport au corps 13 avec un axe de rotation qui est perpendiculaire ou parallèle à l'axe longitudinal de la fibre optique 11 dans la zone à sectionner.

Dans une configuration préférentielle, la fibre optique 11 s'étend dans le corps 13 de chaque côté de la tige 12. Par exemple, le corps 13 définit une rainure 13a et la tige 12 est montée dans la rainure 13a. La fibre optique 11 traverse la rainure en passant à travers la tige 12. La rotation de la tige 12 par rapport au corps 13 déforme la fibre optique 11 puis sectionne la fibre optique 11. L'arbre de rotation de la tige 12 est disposé à distance de la fibre optique 11.

Dans un mode de réalisation particulier, la fibre optique 11 est montée de manière à définir une boucle de fibre optique 11 dans le fusible optique. La fibre optique 11 n'est pas montée en ligne droite dans le fusible optique entre l'entrée et la sortie, ni en tension entre l'entrée et la sortie.

De manière préférentielle, le fusible optique comporte un corps 13 définissant une cavité. La boucle de fibre optique 11 est formée dans la cavité. La fibre optique 11 est montée fixement dans la cavité au moyen des deux rainures 13a qui forment deux points de fixation séparés par la tige. De cette manière, lorsque la tige 12 est actionnée, elle tend la fibre jusqu'à la sectionner.

Il est avantageux que la fibre optique soit montée libre de mouvement à l'extérieur des deux points de fixation. Il est également intéressant de prévoir que la fibre optique soit enrobée dans un matériau qui se déforme pour suivre les déformations de la fibre optique avec la température. Par exemple, la fibre optique peut être enrobée dans un matériau de type élastomère. Le matériau est flexible pour se déformer de manière à absorber une partie des contraintes qui existent par la déformation différentielle entre la fibre optique et le corps 13. La dilatation thermique différentielle entre la fibre optique et le corps 13 n'est pas suffisante pour obtenir la rupture de la fibre optique. Cette configuration permet d'avoir une fibre libre ou relativement libre de mouvement à l'intérieur de la cavité. La fibre optique 11 pouvant se déplacer par rapport au corps 13, les déformations du corps 13 et de la fibre optique 11 avec l'évolution de la température (dilatation thermique) ne se traduisent pas par une déformation de la fibre optique 11 qui peut entraîner sa rupture. La différence de coefficient de dilatation thermique entre le corps 13 et la fibre optique 11 n'est pas en mesure de sectionner la fibre optique 11, ni en mesure de déformer la fibre optique 11.

Dans le mode de réalisation illustré à la figure 3, la boucle de fibre optique 11 passe autour de deux plots 14 en saillie dans la cavité. Les deux plots 14 définissent également un trou traversant qui permet de fixer le fusible optique à une plaque de fixation 15 illustrée sur les figures 5 et 6. Lorsque le câble entre en contact de la tige 12, la tige 12 se déplace et tire sur la fibre optique 11 qui se tend jusqu'à atteindre la rupture de la fibre optique 11 par cisaillement. Cette configuration de fusible optique permet de sectionner efficacement la fibre optique 11 tout en étant économique. Cette solution est particulièrement avantageuse car il n'est pas nécessaire d'alimenter les pylônes en électricité car les fusibles optiques 6 sont des organes mécaniques qui changent d'état en profitant de l'énergie fournie par le câble à observer.

Dans une autre configuration, chaque pylône comporte au moins un fusible optique, un dispositif émetteur d'un signal optique et un dispositif récepteur dudit signal. Lorsqu'un fusible bascule d'un état passant à un étant bloquant, la fibre optique 11 n'est plus en mesure de faire transiter le signal optique, par exemple la fibre optique 11 est sectionnée. Le dispositif récepteur associé au fusible optique à l'état bloquant détecte l'absence de signal et fournit l'information à un circuit de détection qui identifie le pylône associé à l'incident et qui génère une alarme. Dans ce mode de réalisation, le circuit de détection est dissocié du dispositif récepteur et se trouve avantageusement dans une station. L'information est fournie au circuit de détection, par exemple, sous la forme d'un signal optique.

Il est avantageux qu'un premier fusible optique soit disposé à une extrémité d'un pylône et qu'un deuxième fusible optique soit disposé à l'extrémité opposée du pylône selon l'axe longitudinal du câble qui peut être son axe de circulation. Cette configuration permet de détecter une sortie du câble hors de la gorge d'un galet aux deux extrémités de la tête du pylône. Pour détecter la perte ou le blocage d'un galet, il est avantageux de monter un fusible optique sur chaque balancier comme illustré à la figure 7. Le fusible optique 6 est préférentiellement monté pour détecter un basculement du balancier comportant le galet ou les galets à suivre au-delà d'une valeur seuil.

Pour détecter un évènement de câble, le dispositif émetteur 7 du dispositif de détection émet un signal optique qui peut être continu, quasi-continu, périodique ou apériodique. Le signal optique traverse le ou les fusibles optiques 6 jusqu'à atteindre le dispositif récepteur 8 disposé sur la même ligne optique 9. A réception du signal optique, le dispositif récepteur 8 en déduit qu'aucun déraillement n'a été détecté. Dans une configuration particulière, la ligne optique 9 définit une boucle, il est alors intéressant de prévoir que le dispositif émetteur 7 et le dispositif récepteur 8 sont disposés au même endroit et forment par exemple deux parties d'un même appareil. Par exemple, le dispositif émetteur et le deuxième récepteur sont disposés dans la gare motrice pour détecter un incident sur tous les pylônes possédant un élément fusible. Dans une installation avec de multiples gares, il est possible d'avoir plusieurs dispositifs émetteurs et dispositifs récepteurs de manière à dissocier les zones observées dans le cheminement du câble.

Lorsqu'un fusible optique 6 détecte un évènement de câble 2, le fusible optique 6 devient bloquant et le dispositif récepteur 8 en déduit qu'un évènement de câble 2 a eu lieu. Le dispositif récepteur 8 génère une alarme qui peut arrêter le moteur d'entrainement du câble 2.

Si la ligne optique 9 comporte plusieurs fusibles optiques 6 montés en série, une analyse de la ligne optique 9 par échométrie ou réflectométrie optique permet de déterminer la distance du défaut, c'est-à-dire la position de la coupure de la ligne optique. Il est alors possible de déterminer précisément la position du fusible optique 6, donc du pylône fautif et éventuellement du type d'évènement de câble 2 détecté. L'utilisation d'un signal optique est beaucoup plus précise que celle d'un signal électrique.

L'utilisation d'un fusible optique 6 pour détecter un évènement sur un câble 2, par exemple le déraillement d'un câble 2 ou une défaillance du galet 5 est particulièrement avantageuse car les modifications à réaliser sur une installation existante sont minimes. Il est donc possible de remplacer un dispositif de détection par signal électrique par un dispositif de détection par signal optique.

Un dispositif émetteur 7 d'un signal optique remplace un dispositif émetteur d'un signal électrique. Un dispositif récepteur 8 d'un signal optique remplace un dispositif récepteur du signal électrique. La ligne électrique est remplacée par la ligne optique en fibre optique.

Une ligne optique 9 est installée qui relie le dispositif émetteur 7 du signal optique avec le dispositif récepteur 8 du signal optique. Au moins un fusible optique est monté le long de la connexion optique 9 pour détecter un déraillement du câble. Le au moins un fusible optique 6 remplace le au moins un fusible électrique sur la pluralité de pylônes 4 de l'installation. De manière avantageuse, les multiples fusibles optiques 6 sont tous montés en série sur la même ligne optique 9.

Il est avantageux de monter le fusible optique 6 dans un connecteur optique qui introduit une atténuation dans le signal optique. Par exemple, au moins une des extrémités du fusible optique 6 introduit une atténuation du signal. L'atténuation du signal peut être faible mais suffisamment importante pour être détectée.

Lorsque les fusibles optiques 6 sont montés en série et lorsqu'un des fusibles optiques 6 change d'état pour signaler une défaillance, la rupture de la ligne optique est détectée, le signal optique ne peut plus arriver jusqu'au capteur. Il est alors avantageux de détecter quel fusible optique 6 a changé d'état. Une manière préférentielle de détecter la position du fusible optique 6 le long de la ligne optique est d'utiliser une technique de réflectométrie. Un signal est émis qui se propage jusqu'au fusible optique bloquant le signal optique et qui forme un miroir. La section de la fibre optique réfléchit le signal émis.

Le signal renvoyé est analysé afin de déterminer la position du miroir et donc la position du fusible optique qui a changé d'état. Dans un premier mode d'analyse, le signal renvoyé et capté par le réflectomètre est traité par un dispositif de calcul, par exemple un calculateur, pour déterminer le nombre de connecteurs optiques traversés. Chaque connecteur optique introduit une perturbation. En calculant le nombre de perturbation, on peut déterminer le nombre de connecteurs optiques traversé. Il est possible de déterminer la position du dernier fusible optique à l'état passant et donc la position du fusible optique suivant qui se trouve à l'état bloquant. La position des fusibles étant connue le long de la ligne optique, il est possible de déterminer la position du fusible optique préalablement à son inspection et éventuellement d'anticiper le type de défaillance.

Dans un second mode d'analyse, le signal renvoyé et capté par le réflectomètre est traité par un dispositif de calcul, par exemple un calculateur, pour déterminer la durée de transit du signal optique. Le milieu de circulation du signal optique étant connu, c'est-à-dire la fibre optique, il est possible de déterminer la position du miroir et donc la position du fusible optique qui a changé d'état. Si la distance de chaque fusible optique par rapport réflectomètre est connue, il est possible de déterminer quel fusible a basculé d'état.

Dans une alternative de réalisation, les fusibles optiques sont montés en série, mais la distance de fibre optique qui sépare chaque groupe de deux fusibles optiques consécutifs est supérieure à une distance seuil, par exemple 1 mètre. La distance seuil est définie par la résolution de l'appareil de mesure du signal optique. La distance seuil correspond à la distance minimale qui existe le long de la fibre optique entre deux évènements et qui permet une distinction par l'appareil de mesure du signal optique. Si un appareil de mesure du signal optique peut différencier deux évènements intervenants sur deux pylônes consécutifs car ils sont espacés par plusieurs dizaines de mètres le long de la fibre optique, il est plus difficile de distinguer deux incidents pour deux fusibles distants de quelques centimètres sur un même pylône.

Il est alors avantageux de toujours séparer deux fusibles optiques montés consécutivement le long de la fibre optique par la distance seuil. Il est également avantageux de monter en série le long de la fibre optiques deux fusibles optiques qui sont physiquement séparés au moins de la distance seuil pour faciliter le montage. Il est également possible de monter consécutivement deux fusibles optiques le long de la fibre optique, les deux fusibles optiques sont séparés par la distance seuil le long de la fibre optique alors que, physiquement, ils ne sont pas séparés l'un de l'autre d'une distance égale à la valeur seuil. La détermination du fusible optique ayant changé d'état est réalisée en calculant le temps mis pour recevoir le signal réfléchi par le fusible qui a changé d'état depuis l'émission du signal optique destiné à traverser les fusibles optiques.

Dans un mode de réalisation particulier, chaque fusible optique est associé à un connecteur qui introduit une atténuation du signal optique lors de son passage. Dans une configuration particulière, l'installation possède un nombre de fusibles optiques qui est supérieur à une valeur seuil permettant de réaliser une analyse du signal par réflectométrie. Il est alors avantageux de diviser l'installation en une pluralité de lignes optiques, chaque ligne optique possède une fibre optique et un nombre de fusibles optiques inférieur à la valeur seuil. Les fusibles optiques sont montés en série.

Dans un mode de réalisation avantageux, chaque pylône est associé à une fibre optique. Chaque pylône est testé indépendamment pour vérifier le bon fonctionnement du pylône. Par exemple, tous les pylônes sont testés en moins de 5 secondes, par exemple en moins de 3 secondes, ou en moins de 2 secondes voire en moins d'une seconde. Quand on détecte qu'un fusible optique change d'état, on arrête l'installation. On détecte rapidement le pylône associé à la défaillance car on identifie la fibre optique qui bloque le passage du signal optique. On peut alors réaliser une analyse complémentaire de la ligne optique à l'origine de l'arrêt de l'installation, avantageusement par réflectométrie, pour détecter quel fusible optique a basculé d'état sur le pylône. On peut alors déterminer quel type de défaillance est intervenu.

## Revendications

1. Installation de transport par câble (1) comprenant :
- un câble (2),
- une pluralité de pylônes (4) munis chacun d'au moins un galet (5), le câble (2) étant disposé en appui sur le au moins galet (5) de la pluralité de pylônes (4), au moins un pylône (4) de la pluralité de pylônes (4) étant muni d'au moins un fusible (6) définissant un premier état autorisant le passage d'un signal et un second état bloquant le passage du signal,
- un dispositif de détection (6, 7, 8) configuré pour détecter au moins un évènement de câble (2), le dispositif de détection (6, 7, 8) faisant circuler un signal à travers le au moins un fusible (6) pour suivre l'état du au moins un fusible (6), le au moins un fusible (6) étant configuré pour changer d'état entre le premier état et le second état lorsque le au moins un fusible (6) détecte ledit au moins un évènement de câble (2), le dispositif de détection (6, 7, 8) étant configuré pour émettre une alarme en réponse à la détection d'un changement d'état du au moins un fusible (6),
**caractérisé en ce que** le au moins un fusible (6), est un fusible optique qui comporte une fibre optique (11), **en ce que** le dispositif de détection (6, 7, 8) comporte un dispositif émetteur (7) configuré pour émettre un signal optique, un dispositif récepteur (8) configuré pour recevoir ledit signal optique, le dispositif émetteur (7) étant relié au dispositif récepteur (8) par le au moins un fusible optique (6) et **en ce que** le au moins un fusible optique (6) est configuré pour changer d'état lorsque ledit au moins un fusible optique (6) est sollicité mécaniquement par le câble (2).

2. Installation de transport par câble (1) selon la revendication 1, dans laquelle le au moins un fusible optique (6) est configuré pour sectionner la fibre optique (11) lorsque le au moins un fusible optique (6) est sollicité mécaniquement par le câble (2).

3. Installation de transport par câble (1) selon la revendication 2, dans laquelle le au moins un fusible optique (6) est configuré pour sectionner la fibre optique (11) par cisaillement lorsque le au moins un fusible optique (6) est sollicité mécaniquement par le câble (2).

4. Installation de transport par câble (1) selon la revendication 3, dans laquelle le au moins un fusible optique (6) comporte une tige (12) montée mobile pour sectionner une boucle de fibre optique (11) lorsque la tige (12) est sollicitée mécaniquement par le câble (2) et dans laquelle le au moins un fusible optique (6) comporte la boucle de fibre optique (11) et un corps (13) définissant une cavité, la boucle de fibre optique (11) étant montée à l'intérieur de la cavité autour de deux points de fixation (13a) séparés par la tige (12), le au moins un fusible optique (6) étant configuré pour détecter un déraillement du câble (2) au moyen de la tige (12).

5. Installation de transport par câble selon la revendication 4, dans laquelle la boucle de fibre optique (11) traverse la tige (12) selon un premier axe.

6. Installation de transport par câble selon la revendication 5, dans laquelle la tige (12) est montée mobile en rotation autour d'un axe de rotation perpendiculaire au premier axe et à distance du premier axe pour cisailler la boucle de fibre optique (11).

7. Installation de transport par câble selon l'une quelconque des revendications précédentes dans laquelle ledit au moins un évènement de câble est un évènement choisi parmi un déraillement du câble (2) hors d'au moins un desdits galets (5), une perte d'au moins un desdits galets (5), un blocage d'au moins un desdits galets (5).

8. Installation de transport par câble selon l'une quelconque des revendications précédentes dans laquelle chaque pylône (4) comporte un rattrapeur (10) destiné à recevoir le câble (2) échappé du au moins un galet (5) et dans laquelle le au moins un fusible optique (6) fait saillie du rattrapeur (10) pour être heurté par le câble (2) et détecter un déraillement du câble (2) et/ou dans laquelle le rattrapeur (10) possède une pièce mobile connectée au au moins un fusible optique (6) de manière à solliciter mécaniquement le au moins un fusible optique (6) lorsque la pièce mobile est heurtée par le câble (2).

9. Installation de transport par câble (1) selon la revendication 2, dans laquelle la sollicitation mécanique du au moins un fusible optique (6) par le câble (2) est une mise en contact direct du au moins un fusible optique (6) avec le câble (2) et le sciage du au moins un fusible optique (6) par le câble (2).

10. Installation de transport par câble (1) selon la revendication 1, dans laquelle le au moins un fusible optique (6) est agencé pour détecter une perte de galet ou un blocage de galet, le au moins un fusible optique (6) étant lié fonctionnellement à un balancier de la pluralité de pylônes (4) pour changer d'état lorsque que le balancier tourne au-delà d'une valeur seuil.

11. Installation de transport par câble (1) selon l'une quelconque des revendications 1 à 10, le au moins un fusible optique (6) comporte une pluralité de fusibles optiques (6) montés en série sur une ligne optique (9) et destinés à être traversés par le signal optique, chaque fusible optique (6) étant initialement dans le premier état et dans laquelle le dispositif de détection (6, 7, 8) comporte un dispositif de détermination configuré pour déterminer une position d'un fusible optique (6) dans le second état parmi la pluralité de fusibles optiques (6) montés en série lorsqu'un évènement de câble (2) a été détecté.

12. Installation de transport par câble (1) selon la revendication 11 dans lequel le dispositif de détermination est configuré pour calculer un temps de transit du signal optique émis et réfléchi par la fibre optique (11) sectionnée pour déterminer une position du fusible optique (6) dans le second état.

13. Installation de transport par câble (1) selon l'une des revendication 11 et 12 dans lequel les fusibles optiques (6) sont montés chacun dans la ligne optique au moyen d'un connecteur introduisant au moins une perturbation et dans laquelle le dispositif de détermination est configuré pour calculer un nombre de perturbations subi par le signal optique pour déterminer une position du fusible optique (6) dans le second état.

14. Installation de transport par câble (1) selon l'une quelconque des revendications 1 à 10, dans laquelle chaque pylône (4) comporte :
- un boitier de contrôle alimenté en électricité et relié à un circuit de commande par une ligne optique (9), le circuit de commande étant configuré pour émettre l'alarme,
- une pluralité de fusibles optiques (6) connectés au boitier de contrôle, le boitier de contrôle possédant le dispositif émetteur (7) et le dispositif récepteur (8).

15. Procédé de détection d'un évènement sur un câble (2) dans une installation de transport par câble (1) comportant au moins les étapes suivantes :
- fournir une installation de transport par câble (1) comportant un câble (2), une pluralité de pylônes (4) munis chacun d'au moins un galet (5), le câble (2) étant disposé en appui sur le au moins galet (5) de la pluralité de pylônes (4), au moins un pylône (4) de la pluralité de pylônes (4) étant muni d'au moins un fusible définissant un premier état autorisant le passage d'un signal et un second étant bloquant le passage du signal, le au moins un fusible est configuré pour changer d'état entre le premier état et le second état lorsque le au moins un fusible détecte un évènement sur le câble (2) ;
- émettre régulièrement un signal traversant le au moins un fusible ;
- détecter une absence de réception dudit signal par un dispositif récepteur de signal et en déduire un changement d'état du au moins un fusible représentatif d'un évènement sur le câble (2),
procédé **caractérisé en ce que** le au moins fusible, est un fusible optique (6) qui comporte une fibre optique (11), **en ce que** le signal est un signal optique destiné à traverser le au moins un fusible optique (6), **en ce que** le dispositif récepteur est un dispositif récepteur (8) optique et **en ce qu'**au moins un fusible optique (6) est configuré pour changer d'état lorsque ledit au moins un fusible optique (6) est sollicité mécaniquement par le câble (2).

16. Procédé de détection d'un évènement sur un câble (2) dans une installation de transport par câble (1) selon la revendication précédente dans lequel chaque fusible optique (6) appartient à un connecteur optique, les connecteurs optiques étant montés en série le long de la fibre optique (11), dans lequel chaque connecteur optique introduit une perturbation du signal optique lorsque le signal optique traverse le connecteur optique, le procédé comportant un décompte d'un nombre de perturbations du signal optique reçu pour déterminer un nombre de connecteurs optiques traversés et estimer une position du fusible optique (6) ayant changé d'état.

17. Procédé de détection d'un évènement sur un câble (2) dans une installation de transport par câble (1) selon la revendication précédente dans lequel les fusibles optiques (6) sont montés en série le long de la fibre optique (11), dans lequel deux fusibles optiques (6) consécutifs le long de la fibre optique (11) sont toujours séparés d'au moins une distance seuil, la distance seuil correspondant à la distance minimale qui existe le long de la fibre optique (11) entre deux fusibles optiques (6) et qui permet une distinction par un appareil de mesure du signal optique, la détermination du fusible optique (6) ayant changé d'état est réalisée en calculant le temps mis pour recevoir le signal réfléchi par le fusible qui a changé d'état.

18. Procédé de réalisation d'une installation de transport par câble (1) comportant :
- fournir une installation de transport par câble (1) comportant un câble (2), une pluralité de pylônes (4) munis chacun d'au moins un galet (5), le câble (2) étant disposé en appui sur le au moins un galet (5) de la pluralité de pylônes (4), au moins un pylône (4) de la pluralité de pylônes (4) étant muni d'au moins un fusible électrique définissant un premier état autorisant le passage d'un signal électrique et un second état bloquant le passage du signal électrique, le au moins un fusible est configuré pour changer d'état entre le premier état et le second état lorsque le au moins un fusible électrique est sollicité mécaniquement par le câble (2), le au moins un fusible électrique étant relié à un dispositif de détection par un câble électriquement conducteur, le dispositif de détection étant configuré pour détecter au moins un évènement de câble ;
- remplacer le au moins un fusible électrique par un fusible optique (6), le fusible optique (6) définissant un premier état autorisant le passage d'un signal optique et un second état bloquant le passage du signal optique, le au moins un fusible optique (6) étant configuré pour changer d'état entre le premier état et le second état lorsque le au moins un fusible optique (6) détecte un évènement sur le câble (2) ;
- relier le au moins un fusible optique (6) au dispositif de détection par une ligne optique (9),
et dans lequel le dispositif de détection (6, 7, 8) comporte un dispositif émetteur (7) configuré pour émettre un signal optique, un dispositif récepteur (8) configuré pour recevoir ledit signal optique, le dispositif émetteur (7) étant relié au dispositif récepteur (8) par le au moins un fusible optique (6), le dispositif de détection (7, 8) étant configuré pour émettre une alarme en réponse à la détection d'un changement d'état du au moins un fusible optique (6).

## Patentansprüche

1. Seilbahnanlage (1), umfassend:
- ein Seil (2),
- eine Vielzahl von Masten (4), die jeweils mit mindestens einer Rolle (5) versehen sind, wobei das Seil (2) auf der mindestens einen Rolle (5) der Vielzahl von Masten (4) in Auflage angeordnet ist, wobei mindestens ein Mast (4) der Vielzahl von Masten (4) mit mindestens einer Sicherung (6) versehen ist, die einen ersten Zustand definiert, der den Durchgang eines Signals zulässt, und einen zweiten Zustand, der den Durchgang des Signals sperrt,
- eine Detektionsvorrichtung (6, 7, 8), die dazu konfiguriert ist, mindestens ein Ereignis am Seil (2) zu detektieren, wobei die Detektionsvorrichtung (6, 7, 8) ) ein Signal durch die mindestens eine Sicherung (6 umlaufen lässt, um den Zustand der mindestens einen Sicherung (6) zu verfolgen, die mindestens eine Sicherung (6) dazu konfiguriert ist, ihren Zustand zwischen dem ersten Zustand und dem zweiten Zustand zu ändern, wenn die mindestens eine Sicherung (6) das mindestens eine Ereignis am Seil (2) detektiert, wobei die Detektionsvorrichtung (6, 7, 8) dazu konfiguriert ist, in Reaktion auf die Detektion einer Zustandsänderung der mindestens einen Sicherung (6) einen Alarm auszugeben,
**dadurch gekennzeichnet, dass** die mindestens eine Sicherung (6) eine optische Sicherung ist, die eine Lichtleitfaser (11) umfasst, und dass die Detektionsvorrichtung (6, 7, 8) eine Sendeeinrichtung (7) umfasst, die dazu konfiguriert ist, ein optisches Signal zu emittieren, und eine Empfangseinrichtung (8), die dazu konfiguriert ist, das optische Signal zu empfangen, wobei die Sendeeinrichtung (7) über die mindestens eine optische Sicherung (6) mit der Empfangseinrichtung (8) verbunden ist, und dass die mindestens eine optische Sicherung (6) dazu konfiguriert ist, ihren Zustand zu ändern, wenn die mindestens eine optische Sicherung (6) durch das Seil (2) mechanisch belastet wird.

2. Seilbahnanlage (1) nach Anspruch 1, wobei die mindestens eine optische Sicherung (6) dazu konfiguriert ist, die Lichtleitfaser (11) zu durchtrennen, wenn die mindestens eine optische Sicherung (6) durch das Seil (2) mechanisch belastet wird.

3. Seilbahnanlage (1) nach Anspruch 2, wobei die mindestens eine optische Sicherung (6) dazu konfiguriert ist, die Lichtleitfaser (11) durch Scherung zu durchtrennen, wenn die mindestens eine optische Sicherung (6) durch das Seil (2) mechanisch belastet wird.

4. Seilbahnanlage (1) nach Anspruch 3, wobei die mindestens eine optische Sicherung (6) einen Schaft (12) umfasst, der beweglich montiert ist, um eine Lichtleitfaser (11)-Schleife zu durchtrennen, wenn der Schaft (12) durch das Seil (2) mechanisch belastet wird, und wobei die mindestens eine optische Sicherung (6) die Lichtleitfaser (11)-Schleife und einen Körper (13) umfasst, der einen Hohlraum definiert, wobei die Lichtleitfaser (11)-Schleife im Inneren des Hohlraums um zwei Befestigungspunkte (13a) herum montiert ist, die durch den Schaft (12) getrennt sind, und die mindestens eine optische Sicherung (6) dazu konfiguriert ist, anhand des Schafts (12) eine Entgleisung des Seils (2) zu detektieren.

5. Seilbahnanlage nach Anspruch 4, wobei die Lichtleitfaser (11)-Schleife den Schaft (12) entlang einer ersten Achse durchläuft.

6. Seilbahnanlage nach Anspruch 5, wobei der Schaft (12) um eine Drehachse senkrecht zur ersten Achse und in einem Abstand von der ersten Achse herum drehbar montiert ist, um die Lichtleitfaser (11)-Schleife zu durchzuschneiden.

7. Seilbahnanlage nach einem der vorherigen Ansprüche, wobei das mindestens eine Seilereignis ein Ereignis ist, das aus einer Entgleisung des Seils (2) aus mindestens einer der Rollen (5), einem Verlust mindestens einer der Rollen (5) und einer Blockierung mindestens einer der Rollen (5) gewählt ist.

8. Seilbahnanlage nach einem der vorherigen Ansprüche, wobei jeder Mast (4) einen Auffänger (10) umfasst, der dazu bestimmt ist, das von der mindestens einen Rolle (5) abgesprungene Seil (2) aufzunehmen, und wobei die mindestens eine optische Sicherung (6) aus dem Auffänger (10) vorspringt, um vom Seil (2) getroffen zu werden und eine Entgleisung des Seils (2) zu detektieren und/oder wobei der Auffänger (10) ein bewegliches Teil aufweist, das mit der mindestens einen optischen Sicherung (6) so verbunden ist, dass die mindestens eine optische Sicherung (6) mechanisch belastet wird, wenn das bewegliche Teil vom Seil (2) getroffen wird.

9. Seilbahnanlage (1) nach Anspruch 2, wobei die mechanische Belastung der mindestens einen optischen Sicherung (6) durch das Seil (2) ein direktes Inkontaktbringen der mindestens einen optischen Sicherung (6) mit dem Seil (2) und das Durchsägen der mindestens einen optischen Sicherung (6) durch das Seil (2) ist.

10. Seilbahnanlage (1) nach Anspruch 1, wobei die mindestens eine optische Sicherung (6) angeordnet ist, um einen Rollenverlust oder eine Rollenblockierung zu detektieren, wobei die mindestens eine optische Sicherung (6) mit einem Pendel der Vielzahl von Masten (4) funktionell verbunden ist, um ihren Zustand zu ändern, wenn das Pendel sich über einen Schwellenwert hinaus dreht.

11. Seilbahnanlage (1) nach einem der Ansprüche 1 bis 10, wobei die mindestens eine optische Sicherung (6) eine Vielzahl von optischen Sicherungen (6) umfasst, die auf einer optischen Leitung (9) in Reihe geschaltet sind und dazu bestimmt sind, vom optischen Signal durchlaufen zu werden, wobei jede optische Sicherung (6) anfangs im ersten Zustand ist, und wobei die Detektionsvorrichtung (6, 7, 8) eine Bestimmungsvorrichtung umfasst, die dazu konfiguriert ist, eine Position einer im zweiten Zustand befindlichen optischen Sicherung (6) unter der Vielzahl der in Reihe geschalteten optischen Sicherungen (6) zu bestimmen, wenn ein Ereignis am Seil (2) detektiert worden ist.

12. Seilbahnanlage (1) nach Anspruch 11, wobei die Bestimmungsvorrichtung dazu konfiguriert ist, eine Laufzeit des emittierten und durch die durchtrennte Lichtleitfaser (11) reflektierten optischen Signals zu berechnen, um eine Position der im zweiten Zustand befindlichen optischen Sicherung (6) zu bestimmen.

13. Seilbahnanlage (1) nach einem der Ansprüche 11 und 12, wobei die optischen Sicherungen (6) in der optischen Leitung jeweils durch einen Verbinder montiert sind, der mindestens eine Störung induziert, und wobei die Bestimmungsvorrichtung dazu konfiguriert ist, eine Anzahl von Störungen zu berechnen, denen das optische Signal unterzogen wird, um eine Position der im zweiten Zustand befindlichen optischen Sicherung (6) zu bestimmen.

14. Seilbahnanlage (1) nach einem der Ansprüche 1 bis 10, wobei jeder Mast (4) umfasst:
- einen Steuerkasten, die mit Strom versorgt wird und über eine optische Leitung (9) mit einer Steuerschaltung verbunden ist, wobei die Steuerschaltung dazu konfiguriert ist, den Alarm auszugeben,
- eine Vielzahl von optischen Sicherungen (6), die mit dem Steuerkasten verbunden sind, wobei die Steuerkasten die Sendeeinrichtung (7) und die Empfangseinrichtung (8) aufweist.

15. Verfahren zur Detektion eines Ereignisses an einem Seil (2) in einer Seilbahnanlage (1), mindestens umfassend die folgenden Schritte:
- Bereitstellen einer Seilbahnanlage (1), umfassend ein Seil (2), eine Vielzahl von Masten (4), die jeweils mit mindestens einer Rolle (5) versehen sind, wobei das Seil (2) auf der mindestens einen Rolle (5) der Vielzahl von Masten (4) in Auflage angeordnet ist, wobei mindestens ein Mast (4) der Vielzahl von Masten (4) mit mindestens einer Sicherung versehen ist, die einen ersten Zustand definiert, der den Durchgang eines Signals zulässt, und einen zweiten Zustand, der den Durchgang des Signals sperrt, wobei die mindestens eine Sicherung dazu konfiguriert ist, ihren Zustand zwischen dem ersten Zustand und dem zweiten Zustand zu ändern, wenn die mindestens eine Sicherung ein Ereignis am Seil (2) detektiert;
- regelmäßiges Emittieren eines Signals durch die mindestens eine Sicherung;
- Detektieren eines ausbleibenden Empfangs des Signals durch eine Signalempfangseinrichtung und Ableiten einer Zustandsänderung der mindestens einen Sicherung, die für ein Ereignis am Seil (2) repräsentativ ist, wobei das Verfahren **dadurch gekennzeichnet ist, dass** die mindestens eine Sicherung eine optische Sicherung (6) ist, die eine Lichtleitfaser (11) umfasst, dass das Signal ein optisches Signal ist, das dazu bestimmt ist, die mindestens eine optische Sicherung (6) zu durchlaufen, dass die Empfangseinrichtung eine optische Empfangseinrichtung (8) ist, und dass mindestens eine optische Sicherung (6) dazu konfiguriert ist, ihren Zustand zu ändern, wenn die mindestens eine optische Sicherung (6) durch das Seil (2) mechanisch belastet wird.

16. Verfahren zur Detektion eines Ereignisses an einem Seil (2) in einer Seilbahnanlage (1) nach dem vorherigen Anspruch, wobei jede optische Sicherung (6) zu einem optischen Verbinder gehört, wobei die optischen Verbinder entlang der Lichtleitfaser (11) in Reihe geschaltet sind, wobei jeder optische Verbinder eine Störung des optischen Signals induziert, wenn das optische Signal den optischen Verbinder durchläuft, wobei das Verfahren eine Zählung einer Anzahl von Störungen des empfangenen optischen Signals umfasst, um eine Anzahl der durchlaufenen optischen Verbinder zu bestimmen und eine Position der optischen Sicherung (6) zu schätzen, deren Zustand sich geändert hat,.

17. Verfahren zur Detektion eines Ereignisses an einem Seil (2) in einer Seilbahnanlage (1) nach dem vorherigen Anspruch, wobei die optischen Sicherungen (6) entlang der Lichtleitfaser (11) in Reihe geschaltet sind, wobei zwei aufeinanderfolgende optische Sicherungen (6) entlang der Lichtleitfaser (11) stets mindestens um einen Schwellenabstand voneinander getrennt sind, wobei der Schwellenabstand dem Mindestabstand zwischen zwei optischen Sicherungen (6) entlang der Lichtleitfaser (11) entspricht, der eine Unterscheidung durch ein Gerät zur Messung des optischen Signals ermöglicht, wobei die Bestimmung der optischen Sicherung (6), deren Zustand sich geändert hat, durch Berechnen der Zeit bis zum Empfang des Signals erfolgt, das durch die Sicherung reflektiert wird, deren Zustand sich geändert hat.

18. Verfahren zur Herstellung einer Seilbahnanlage (1) umfassend:
- Bereitstellen einer Seilbahnanlage (1), umfassend ein Seil (2), eine Vielzahl von Masten (4), die jeweils mit mindestens einer Rolle (5) versehen sind, wobei das Seil (2) auf der mindestens einen Rolle (5) der Vielzahl von Masten (4) in Auflage angeordnet ist, wobei mindestens ein Mast (4) der Vielzahl von Masten (4) mit mindestens einer elektrischen Sicherung versehen ist, die einen ersten Zustand definiert, der den Durchgang eines elektrischen Signals zulässt, und einen zweiten Zustand, der den Durchgang des elektrischen Signals sperrt, wobei die mindestens eine Sicherung dazu konfiguriert ist, ihren Zustand zwischen dem ersten Zustand und dem zweiten Zustand zu ändern, wenn die mindestens eine elektrische Sicherung durch das Seil (2) mechanisch belastet wird; wobei die mindestens eine elektrische Sicherung durch ein elektrisch leitendes Kabel mit einer Detektionsvorrichtung verbunden ist, wobei die Detektionsvorrichtung dazu konfiguriert ist, mindestens ein Seilereignis zu detektieren;
- Ersetzen der mindestens einen elektrischen Sicherung durch eine optische Sicherung (6), wobei die optische Sicherung (6) einen ersten Zustand definiert, der den Durchgang eines optischen Signals zulässt, und einen zweiten Zustand, der den Durchgang des optischen Signals sperrt, wobei die mindestens eine optische Sicherung (6) dazu konfiguriert ist, ihren Zustand zwischen dem ersten Zustand und dem zweiten Zustand zu ändern, wenn die mindestens eine optische Sicherung (6) ein Ereignis am Seil (2) detektiert;
- Verbinden der mindestens einen optischen Sicherung (6) über eine optische Leitung (9) mit der Detektionsvorrichtung.
und wobei die Detektionsvorrichtung (6, 7, 8) eine Sendeeinrichtung (7) umfasst, die dazu konfiguriert ist, ein optisches Signal zu emittieren, und eine Empfangseinrichtung (8), die dazu konfiguriert ist, das optische Signal zu empfangen, wobei die Sendeeinrichtung (7) über die mindestens eine optische Sicherung (6) mit der Empfangseinrichtung (8) verbunden ist, und wobei die Detektionsvorrichtung (7, 8) dazu konfiguriert ist, in Reaktion auf die Detektion einer Zustandsänderung der mindestens einen optischen Sicherung (6) einen Alarm auszugeben.

## Claims

1. Cable transportation installation (1) comprising:
- a cable (2),
- a plurality of pillars (4) each provided with at least one sheave (5), the cable (2) being arranged pressing on the at least one sheave (5) of the plurality of pillars (4), at least one pillar (4) of the plurality of pillars (4) being provided with at least one fuse (6) defining a first state allowing a signal to pass and a second state preventing the signal from passing,
- a detection device (6, 7, 8) configured to detect at least one event on a cable (2), the detection device (6, 7, 8) making a signal flow through the at least one fuse (6) to monitor the state of the at least one fuse (6), the at least one fuse (6) being configured to change state between the first state and the second state when the at least one fuse (6) detects said at least one event on a cable (2), the detection device (6, 7, 8) being configured to emit an alarm in response to detection of a change of state of the at least one fuse (6),
**characterised in that** the at least one fuse (6) is an optical fuse that comprises an optical fibre (11), **in that** the detection device (6, 7, 8) comprises a transmitter device (7) configured to transmit an optical signal, a receiver device (8) configured to receive said optical signal, the transmitter device (7) being connected to the receiver device (8) by the at least one optical fuse (6), and **in that** the at least one optical fuse (6) is configured to change state when said at least one optical fuse (6) is mechanically stressed by the cable (2).

2. Cable transportation installation (1) according to claim 1, wherein the at least one optical fuse (6) is configured to cut the optical fibre (11) when the at least one optical fuse (6) is mechanically stressed by the cable (2).

3. Cable transportation installation (1) according to claim 2, wherein the at least one optical fuse (6) is configured to cut the optical fibre (11) by shearing when the at least one optical fuse (6) is mechanically stressed by the cable (2).

4. Cable transportation installation (1) according to claim 3, wherein the at least one optical fuse (6) comprises a pin (12) fitted in movable manner to sever a loop of optical fibre (11) when the pin (12) is mechanically stressed by the cable (2) and wherein the at least one optical fuse (6) comprises the loop of optical fibre (11) and a body (13) defining a cavity, the loop of optical fibre (11) being fitted inside the cavity around two attachment points (13a) separated by the pin (12), the at least one optical fuse (6) being configured to detect derailment of the cable (2) by means of the pin (12).

5. Cable transportation installation (1) according to claim 4, wherein the loop of optical fibre (11) passes through the pin (12) along a first axis.

6. Cable transportation installation according to claim 5, wherein the pin (12) is fitted movable in rotation around an axis of rotation perpendicular to the first axis and at a distance from the first axis to sever the loop of optical fibre (11).

7. Cable transportation installation (1) according to any one of the foregoing claims, wherein said at least one event on a cable is an event chosen from derailment of the cable (2) from at least one of said sheaves (5), loss of at least one of said sheaves (5), or blocking of at least one of said sheaves (5).

8. Cable transportation installation according to any one of the foregoing claims, wherein each pillar (4) comprises a catcher (10) designed to receive the cable (2) that has escaped from the at least one sheave (5) and wherein the at least one optical fuse (6) is salient from the catcher (10) so as to be struck by the cable (2) and to detect a derailment of the cable (2) and/or wherein the catcher (10) has a movable part connected to the at least one optical fuse (6) so as to mechanically stress the at least one optical fuse (6) when the movable part is struck by the cable (2).

9. Cable transportation installation (1) according to claim 2, wherein the mechanical stressing of the at least one optical fuse (6) by the cable (2) is achieved by a direct contact made by the at least one optical fuse (6) with the cable (2) and severing of the at least one optical fuse (6) by the cable (2).

10. Cable transportation installation (1) according to claim 1, wherein the at least one optical fuse (6) is arranged to detect a sheave loss or a blocked sheave, the at least one optical fuse (6) being functionally connected to a sheave assembly of the plurality of pillars (4) to change state when the sheave assembly rotates beyond a threshold value.

11. Cable transportation installation (1) according to any one of claims 1 to 10, the at least one optical fuse (6) comprises a plurality of optical fuses (6) connected in series on an optical line (9) and designed so that the optical signal can flow through the plurality of optical fuses (6), each optical fuse (6) being initially in the first state, and wherein the detection device (6, 7, 8) comprises a determination device configured to determine a position of one optical fuse (6) in the second state among the plurality of optical fuses (6) connected in series when an event on a cable (2) has been detected.

12. Cable transportation installation (1) according to claim 11, wherein the determination device is configured to calculate a transit time of the emitted optical signal (11) reflected by the severed optical fibre to determine a position of the optical fuse (6) in the second state.

13. Cable transportation installation (1) according to one of claims 11 and 12, wherein the optical fuses (6) are each connected in the optical line by means of a connector introducing at least one disturbance and wherein the determination device is configured to calculate the number of disturbances undergone by the optical signal to determine the position of the optical fuse (6) in the second state.

14. Cable transportation installation (1) according to any one of claims 1 to 10, wherein each pillar (4) comprises:
- a control box supplied with electricity and connected to a control circuit via an optical line (9), the control circuit being configured to emit the alarm,
- a plurality of optical fuses (6) connected to the control box, the control box containing the transmitter device (7) and the receiver device (8).

15. Method for detecting an event on a cable (2) in a cable transportation installation (1) comprising at least the following steps:
- providing a cable transportation installation (1) comprising a cable (2), a plurality of pillars (4) each provided with at least one sheave (5), the cable (2) being arranged pressing on the at least one sheave (5) of the plurality of pillars (4), at least one pillar (4) of the plurality of pillars (4) being provided with at least one fuse defining a first state allowing a signal to pass and a second state preventing the signal from passing, the at least one fuse being configured to change state between the first state and the second state when the at least one fuse detects an event on the cable (2);
- regularly transmitting a signal passing through the at least one fuse;
- detecting absence of receipt of said signal by a signal receiver device and deducing therefrom a change of state of the at least one fuse representative of an event on the cable (2),
method **characterised in that** the at least one fuse is an optical fuse (6) comprising an optical fibre (11), **in that** the signal is an optical signal designed to pass through the at least one optical fuse (6), **in that** the receiver device is an optical receiver device (8) and **in that** at least one optical fuse (6) is configured to change state when said at least one optical fuse (6) is mechanically stressed by the cable (2).

16. Method for detecting an event on a cable (2) in a cable transportation installation (1) according to the foregoing claim, wherein each optical fuse (6) belongs to an optical connector, the optical connectors being connected in series along the optical fibre (11), wherein each optical connector introduces a disturbance of the optical signal when the optical signal passes through the optical connector, the method comprising a countdown of the number of disturbances of the optical signal received to determine the number of optical connectors passed through and to evaluate a position of the optical fuse that changed state.

17. Method for detecting an event on a cable (2) in a cable transportation installation (1) according to the foregoing claim, wherein the optical fuses (6) are connected in series along the optical fibre (11), wherein two consecutive optical fuses (6) along the optical fibre (11) are always separated by a threshold distance, the threshold distance corresponding to the minimum distance that exists along the optical fibre (11) between two optical fuses (6) and that enables a distinction to be made by a measuring device of the optical signal, determination of the optical fuse (6) that changed state being performed by calculating the time taken to receive the signal reflected by the fuse that changed state.

18. Method for manufacturing a cable transportation installation (1) comprising:
- providing a cable transportation installation (1) comprising a cable (2), a plurality of pillars (4) each provided with at least one sheave (5), the cable (2) being arranged pressing on the at least one sheave (5) of the plurality of pillars (4), at least one pillar (4) of the plurality of pillars (4) being provided with at least one electric fuse defining a first state allowing an electrical signal to pass and a second state preventing the electrical signal from passing, the at least one fuse being configured to change state between the first state and the second state when the at least one electric fuse is mechanically stressed by the cable (2), the at least one electric fuse being connected to a detection circuit by an electrically conducting cable, the detection device being configured to detect at least one event on a cable;
- replacing the at least on electric fuse by an optical fuse (6), the optical fuse (6) defining a first state enabling an optical signal to pass and a second state preventing the optical signal from passing, the at least one optical fuse (6) being configured to change state between the first state and the second state when the at least one optical fuse (6) detects an event on the cable (2);
- connecting the at least one optical fuse (6) to the detection circuit via an optical line (9),
and wherein the detection device (6, 7, 8) comprises a transmitter device (7) configured to transmit an optical signal, a receiver device (8) configured to receive said optical signal, the transmitter device (7) being connected to the receiver device (8) by the at least one optical fuse (6), the detection device (6, 7, 8) being configured to emit an alarm in response to detection of a change of state of the at least one optical fuse (6).
